# EUROPEAN PATENT APPLICATION

(11) **EP 3 275 512 A1**
(43) Date of publication of application: **31.01.2018**
(21) Application number: 17180694.6
(22) Date of filing: 11.07.2017
(51) Int. Cl.: A63C 11/04, B23Q 15/16, G05B 19/409, G05B 19/4093, G05B 19/4097

(54) **METHOD AND SYSTEM FOR MACHINING A SKI**

(30) Priority: 13.07.2016 IT 201600073129
(71) Applicant: TECNOPOWER di Capelli Paolo, 29010 Pontenure, Piacenza (IT)
(72) Inventor: CAPELLI, Paolo, I-29010 Pontenure, PIACENZA (IT)
(74) Representative: Chimini, Francesco

(57) **Abstract**

The invention relates to a method of machining a ski, comprising:
-providing a numerical control processing machine suitable to perform a machining on a ski, for example the machining of the base surface;
- providing at least one remote database external to the processing machine, a plurality of different ski machining programmes being stored in said database, each programme being associated with respective input data representative at least of the snow characteristics, of the track, the ski, the athlete, said external database being accessible by means of the operator interface through a communication network;
- supplying to the database, via the operator interface, current values to be assigned to said input data;
- returning to the operator interface a subset of said ski machining programmes, selected on the basis of said current values;
- supplying to the processing unit a machining programme belonging to said subset. [Fig. 1]

## Description

The present invention relates to a method and a system for machining a ski, especially machining the base surface of a ski.

Machines for machining the base surface of a ski are already known, in particular a micro-scoring suitable to define threads which facilitate the discharge of water droplets from under the skis, improving the sliding and thus the performance of the skier.

To achieve such micro scoring these machines use a grinding wheel the outer surface of which is engraved by chip removal with a diamond tool.

The ski is made to advance and is pressed against the machined surface of the grinding wheel in rotation, so that it forms a series of prints on the base surface of the ski, according to a predetermined design.

One example of a procedure for engraving a grinding wheel is described in EP1179391A2. According to this procedure, the grinding wheel is engraved with a diamond tool to create helical threads with various starting points which intersect, splitting, defining a pattern of various threads which are then reproduced in a complementary manner on the base surface of a ski when brought into contact and moved with respect to the grinding wheel.

To perform the machining of the grinding wheel with the diamond tool and move the ski with respect to the grinding wheel, these machines are usually equipped with four electric motors: a first electric motor controls the rotation of the grinding wheel around its own axis of rotation; a second electric motor controls the movement of the tool in a direction parallel to the rotation axis of the grinding wheel; a third electric motor controls the movement of the tool in a direction perpendicular to the axis of rotation of the grinding wheel; a fourth electric motor controls the advancement of the ski.

These electric motors are controlled by a control unit programmed to control the electric motors so as to carry out the engraving of the grinding wheel and thus the machining of the base surface according to a predetermined pattern.

It is therefore evident that the possibility of creating micro-scoring with whatever pattern desired is limited, as well as by the mechanical structure of the machine, also by the precision with which the electric motors are controlled and most of all synchronized with each other.

The programming methods of the control unit currently applied to machines for processing the base surface of skis are not able to offer the skier the possibility of creating particularly sophisticated micro-scoring patterns which could further improve the sliding of the ski.

Another limitation of the current machines, especially in the competitive sphere, is related to the time needed to find the best machining to carry out depending on the characteristics of the snow, track, ski, athlete, etc.

Currently, in fact, even if the machine is able to produce numerous types of prints, choosing the one to make on the ski is left to the experience of the skier and must in any case be confirmed by tests carried out on the snow.

Often, however, the snow conditions and/or weather conditions change so quickly that it is impossible to carry out the necessary tests for using a print more suited to the changed conditions of the competition.

One purpose of the present invention is to provide a method and a system for machining a ski able to drastically reduce the time required to identify the best machining for the conditions in which the competition takes place.

In this context, a further purpose of the present invention to provide a method and a system for machining the base surface of a ski which makes it possible to produce more sophisticated and complex prints to those produced with the machines and methods of the prior art.

Such purpose is achieved by a machining method of a ski according to claim 1 and with a system according to claim 7. The dependent claims describe preferred embodiments of the invention.

The characteristics and advantages of the method and system according to the invention will, in any case, be evident from the description given below of its preferred embodiments, made by way of a non-limiting example with reference to the appended drawings, wherein:
- Figure 1 schematically represents an example of the system according to the invention;

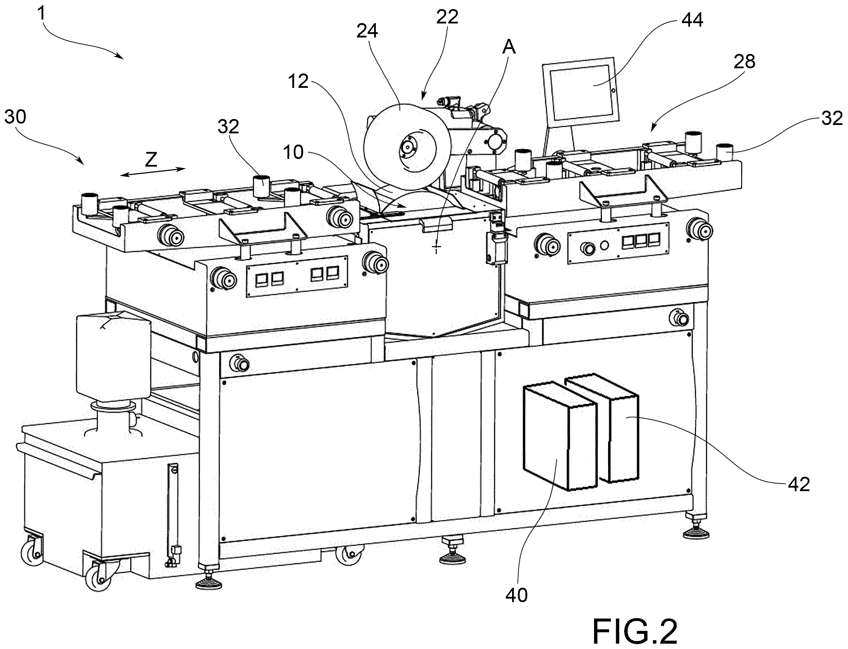

- Figure 2 is a front perspective view of the machine for processing the base surface of a ski according to the invention;

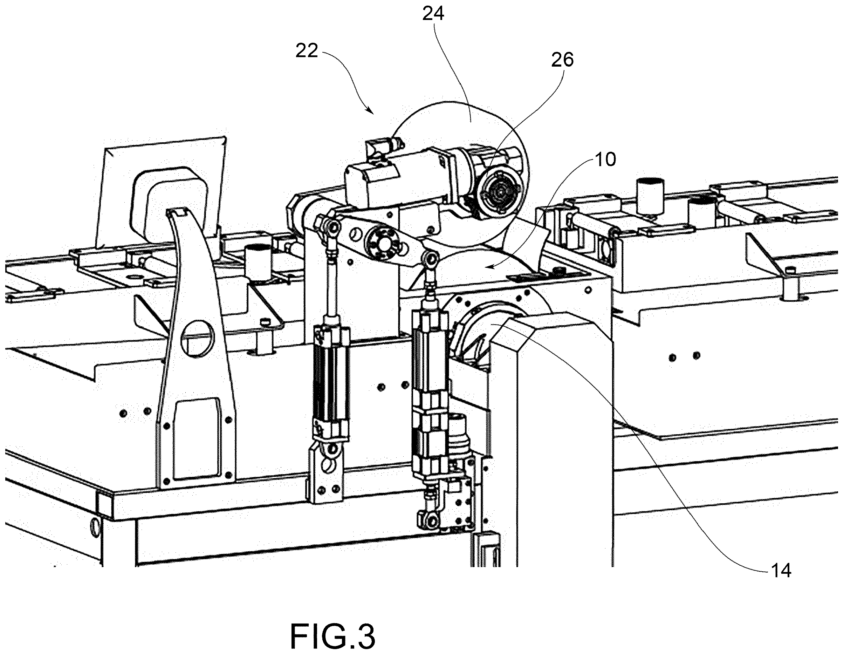

- Figure 3 is a rear perspective view of part of the machine;
- Figure 4 illustrates, in perspective, the drive group of the grinding wheel engraving tool;
- Figures 5, 5a and 5b shows, schematically, the lateral surface of the grinding wheel on which three respective prints have been engraved to be transferred to the base surface, each made up of a combination of two structure profiles;
- Figure 6 illustrates schematically, part of the base surface of a ski on which the print corresponding to the surface of the grinding wheel in figure 5a has been engraved; and
- Figures 7-7d show as many screenshots of the programme implementing the user interface of the machine.

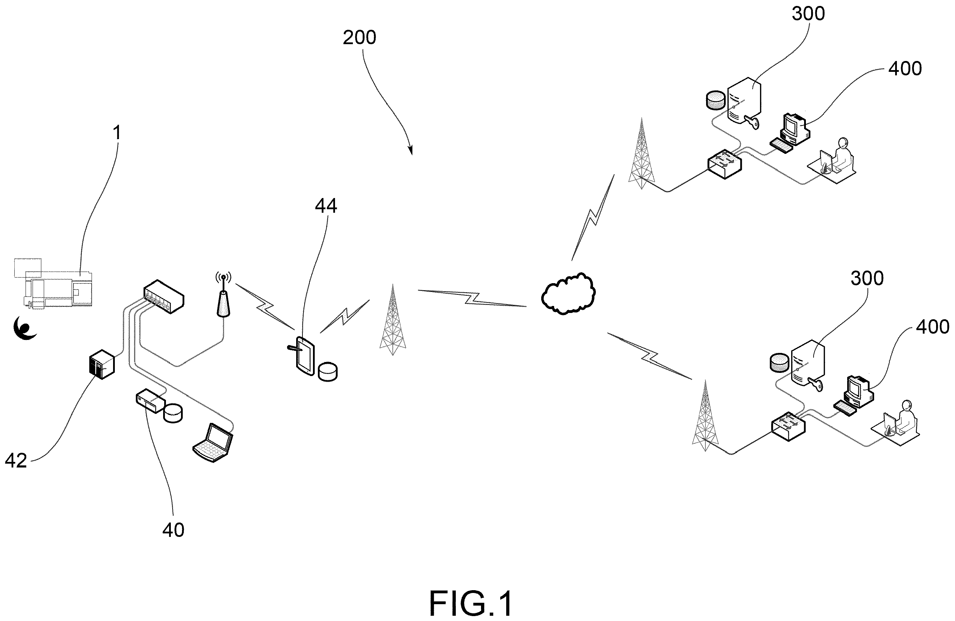

Figure 1 illustrates a machining system 200 of a ski, in particular to produce a print on the base surface of the ski, for example according to the machining method described below.

According to a general embodiment of the invention, the system 200 comprises a numerical control processing machine 1 provided with at least one machine tool of the ski.

The machine tool is controlled by a processing unit 40 according to a predetermined machining programme loaded on the processing unit 40.

For example, the electric motor is controlled by a control logic unit 42, such as a PLC, which in turn receives the machine instructions from the processing unit 40.

The processing machine 1 is also provided with an operator interface 44 comprising hardware and software means for transmitting and receiving data to and from the processing unit 40.

For example, the operator interface 44 is implemented with a tablet connectable to the processing machine 1.

The system 200 also comprises at least one remote database 300, external to the processing machine 1. In this remote database 300 a plurality of different ski machining programmes are stored. Each machining programme is associated with respective input data representative at least of the characteristics of the snow, track, ski and athlete.

For example, in the case of machining the base surface of the ski, in the remote database 300 many different prints are stored each suitable to be used with a particular set of values, or range of values, taken from the input data mentioned above.

The remote database 300 is accessible through the operator interface 44 via a communication network, such as the Internet network.

The remote database 300 is thus programmed to supply to the operator interface 44 a subset of said ski machining programmes, selected on the basis of the value assumed of said input data. For example, this subset may consist of a single machining programme. In any case, the database gives the operator a much smaller number of possible prints than all those stored in the database.

The operator interface 44 is configured to provide to the remote database 300 current values to be assigned to the input data. The term current values is taken to mean values that the operator considers to be representative of the conditions in which the competition will be held. For example, the representative current values of the snow conditions or weather conditions can be provided by suitable sensors.

The operator interface 44 is also configured to receive from the remote database 300 the subset of machining programmes, and to provide the processing unit 40 with a machining programme belonging to said subset.

It is evident that the operator then chooses from, and optionally tests, a reduced number of possible machining programmes, and that this translates into a significant reduction in the time required to identify the most suitable machining programme.

In one embodiment, the remote database/s 300 are accessible from several operator interfaces 44 associated with respective processing machines 1, for example located in different geographic locations.

For example, such remote databases 300 are seen from the operator interface 44 as a single virtual database by means of a cloud computing architecture.

In one embodiment, the system 200 further comprises one or more computers 400 external to the machine configured to perform the machining programmes of the ski. For example, each computer 400 is operatively connected to its own remote database 300, in which it loads the machining programmes produced.

In one embodiment, which will be described later in greater detail, the ski machining programmes include one or more parameters. The operator interface 44 is configured to allow the operator to set the value to assign to these parameters.

The present invention also relates to a machining method of a ski, implemented by the system 200 described above.

The method involves providing a numerical control processing machine 1, which is provided with at least one machining tool of the ski, at least one electric motor suitable to move the machining tool, a processing unit suitable to control the electric motor on the basis of a predetermined machining programme.

The machine is further provided with an operator interface comprising hardware and software means for transmitting and receiving data to and from the processing unit.

The method also provides for making available at least one remote database, external to the processing machine. A plurality of different machining programmes of the ski are stored in the remote database, each programme being associated with respective input data representative at least of the characteristics of the snow, of the track, of the ski, athlete, etc.

The remote database is accessible through the operator interface via a communication network, such as the Internet network.

The method further provides for supplying to the database, via the operator interface, current values to assign to the input data;

The remote database returns to the operator interface a subset of the ski machining programmes, selected on the basis of said current values.

The operator interface thus provides to the processing unit a machining programme from said subset.

At this point the machining of the ski can begin.

A machine 1 will now be described for machining the base surface of a ski according to the invention.

The machine 1 comprises a grinding wheel 10 having a cylindrical side surface 12 which defines a grinding wheel rotation axis A.

The grinding wheel 10 is set in rotation about the axis of rotation A by a first electric motor 14.

The machine further comprises a machining tool of the grinding wheel 16, such as a diamond tool, suitable to be placed in contact with the grinding wheel 10 in rotation so as to create grooves on the cylindrical side surface 12.

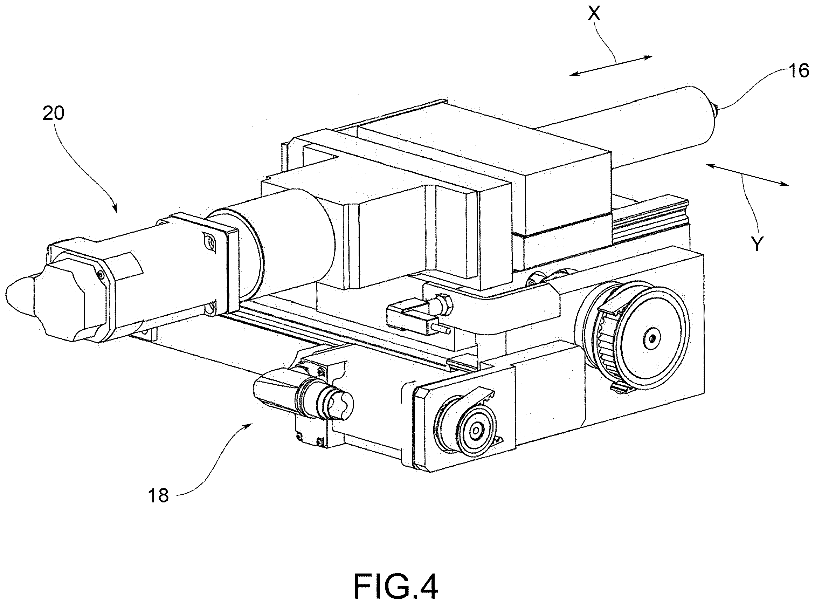

Figure 4 illustrates the tool 16 and the relative drive unit. The tool 16 is driven by a second electric motor 18. In particular, the second electric motor 18 is suitable to move the tool 16 along a longitudinal axis tool translation axis Y parallel to the grinding wheel rotation axis A.

A third electric motor 20 is suitable to move the tool 16 along a transverse penetration axis X, perpendicular to the grinding wheel rotation axis A.

The machine 1 further comprises a ski driving unit 22 suitable to move the ski along a direction of advancement Z parallel to the direction of longitudinal extension of the ski.

The ski driving unit 22 comprises a drive wheel 24 facing the grinding wheel 10 and positioned above the ski, on the opposite side to the base surface.

The drive wheel 24 is placed in rotation by a fourth electric motor 26, so as to move the ski along the direction of advancement Z at a speed corresponding to the tangential speed of the drive wheel 24.

In one embodiment, the drive wheel 24 is made of a deformable material, for example rubber, and contains a fluid under pressure which determines the profile of the outer surface of the wheel 24 which is in contact with the ski.

The machine 1 is equipped with means for adjusting the pressure of the pressurised fluid in the wheel 24, so as to change, as will be described below, the outer surface contour of the wheel 24.

In one embodiment, the driving unit 22 further comprises an input roller conveyor group 28 and an output roller conveyor group 30.

In one embodiment, the roller conveyor groups 28, 30 are equipped with automatic centering devices 32, for example of the pneumatic type, for centering the ski relative to the axis of advancement Z.

As stated above, the machine 1 is a numerical control machine and is provided with a processing unit 40 suitable to receive from the operator interface 44 a machining programme that generates, in accordance with the algorithms described below, machine instructions that are provided to the logic control unit 42 responsible for automation of the machine, and in particular the control of the drives of the four electric motors.

With the operator interface 44 the user can select the print he intends to realize on the base surface of the ski from the subset of prints provided by the remote database 300, set possible parameters to customize such print, change the structure of the print, and in general configure the machine.

The processing unit 40 is programmed to generate multi-profile prints, for example using the technique described in EP1179391A2.

The realization of multi-profile prints provides for creating first threads, called "mother threads", which extend along helical paths around the axis of rotation A of the grinding wheel, and second threads, called "splitting threads", which intersect with the mother threads.

The mother and splitting threads create a pattern of threads having predetermined inclinations and pitches and defining with each other creator teeth on the lateral surface of the grinding wheel 10. When the base surface of a ski is placed in contact with the grinding wheel 10, these creator teeth engrave the base surface reproducing a micro scoring of the corresponding pattern.

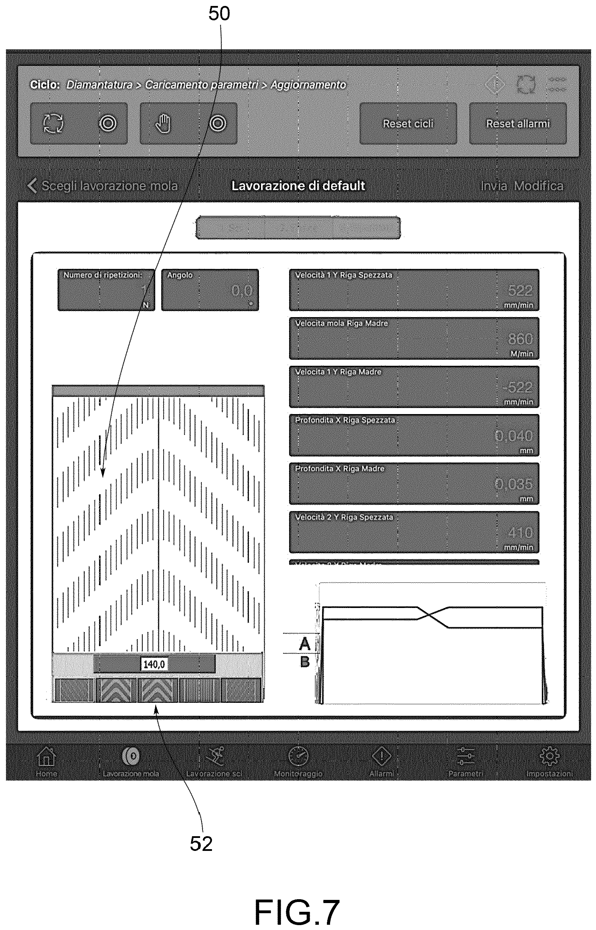

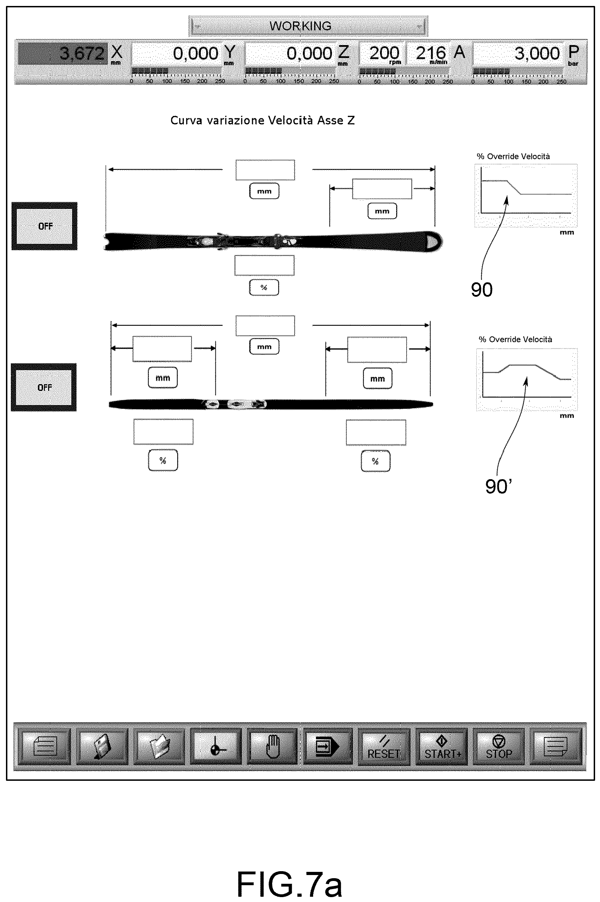

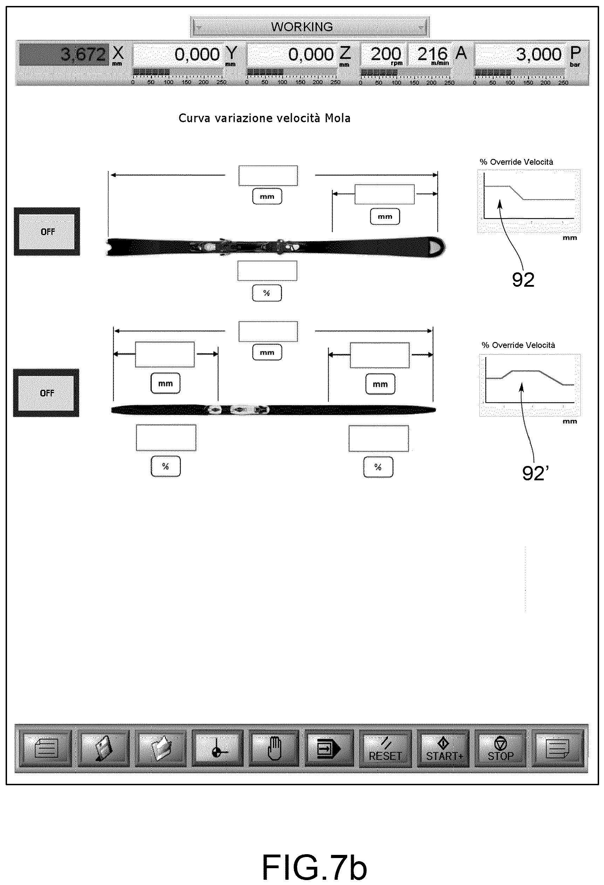

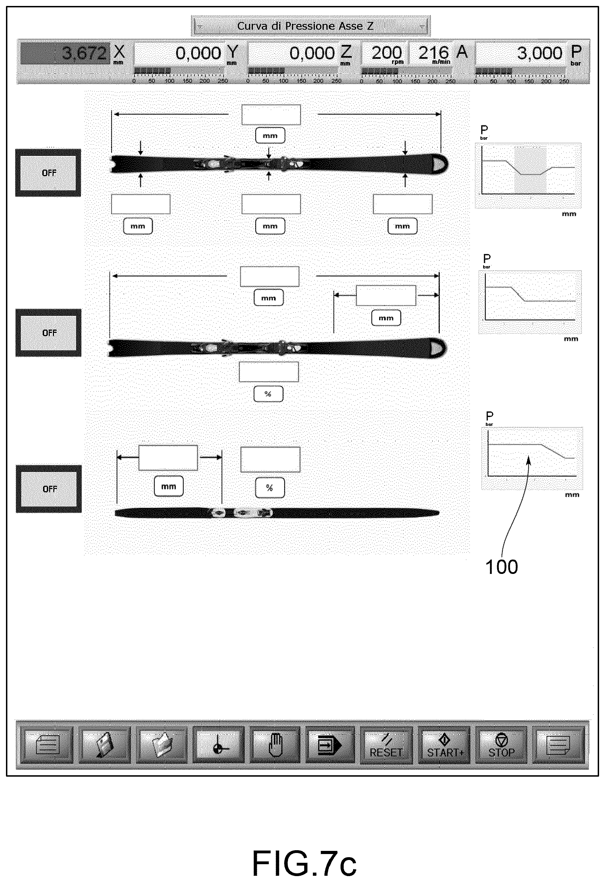

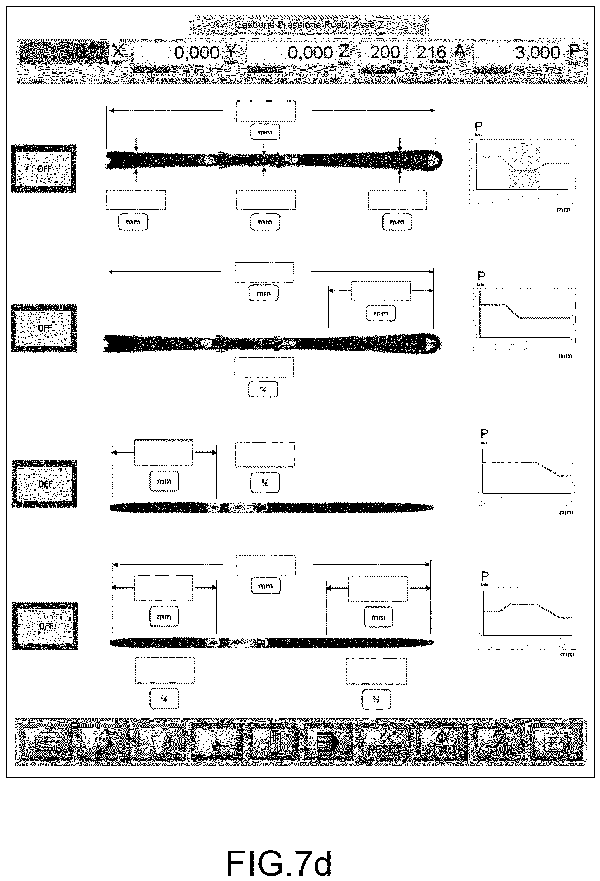

Now, according to one aspect of the invention, the machining method of the base surface provides, after selecting at least one print to be realized on the base surface, for example the print 50 chosen from a subset 52 of prints which the user interface presents the operator (figure 7), generating from said print a profile, i.e. a curve, of position, speed and acceleration for controlling the first electric motor 14. This first electric motor 14 will be the "master" motor for the control of the other motors.

For each of the remaining electric motors 18, 20, 26 an electronic cam is then defined which links the position, speed and acceleration profile of each of the remaining electric motors to the position, speed and acceleration profile of the first electric motor 14.

The term "electronic cam" is used here according to the definition known by the person skilled in automation systems using several electric motors which must be synchronized with each other, and which substantially indicates a transmission function that describes the position, speed, acceleration profile of one electric motor (slave) as a function of the position, speed and acceleration profile of another electric motor (master). In other words, an electric motor (slave) follows the movement of another electric motor (master), according to a law established by the electronic cam.

An electronic cam is usually described by a family of graphs, for example representative of the transmission function of the position, speed and acceleration.

Now, it has been seen that for the control of the motors of the processing machine of the base surface of the ski, the desired result of improving the accuracy and synchronization of such motors is achieved by defining each electronic cam by means of a family of polynomials.

Using polynomials, the machine is able to convert the position, speed and acceleration graphs of the electronic cams into a sequence of machine instructions which allow the slave electric motors to follow the master electric motor 14 (the motor of the grinding wheel) with the desired precision.

In particular, an optimal result is obtained with polynomials of eighth grade.

In a preferred embodiment, the dependence of the slave electric motors on the motor of the grinding wheel is as follows:
- the position, speed and acceleration profile of the second electric motor 18 depends directly on the position, speed and acceleration profile of the first electric motor 14;
- the position, speed and acceleration profile of the third electric motor 20 depends on the position, speed and acceleration profile of the second electric motor 18;
- the position, speed and acceleration profile of the fourth electric motor 26 depends directly on the position, speed and acceleration profile of the first electric motor 14.

Such a control technique of the electric motors makes it possible to produce prints not obtainable with traditional programming techniques.

In particular, it is possible to realize a print given by the combination of several profile structures, namely a print in which at least a second profile structure is incorporated in a first profile structure, without the second structure altering the function of the first structure.

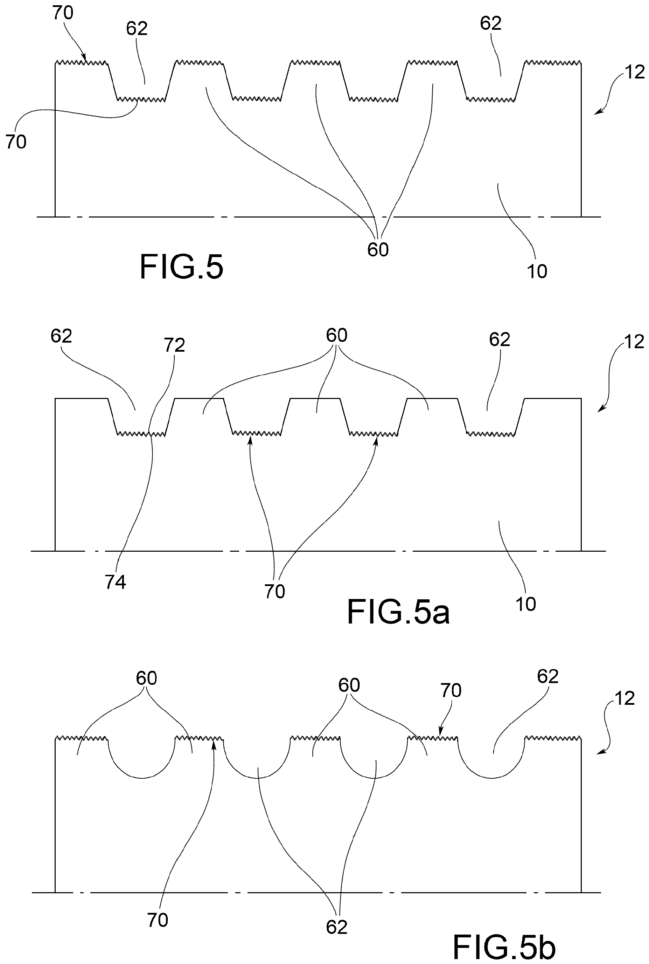

For example, with reference to figures 5-5b, it is possible to produce a print formed by a first structure corresponding to a first scoring suitable to realize in the base surface a plurality of first ridges 60 interspersed with a plurality of first valleys 62.

The print further comprises a second structure corresponding to a second scoring 70 suitable to form in the base surface a plurality of second ridges 72 interspersed with a plurality of second valleys 74.

The four electric motors are controlled in such a way as to realize the second scoring 70 on one or more of the first ridges 60 and / or in one or more of the first valleys 62 of the first scoring.

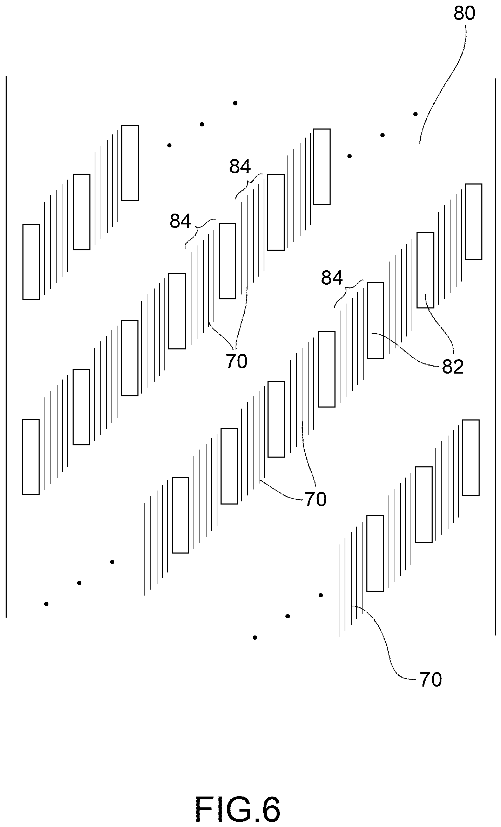

Figure 6 shows schematically the side surface 12 of the grinding wheel 10 in which the first scoring is engraved which forms ridges 60 and valleys 62 of a certain width and height, for example equal to 40 µm. A second scoring 70, with a much finer pitch than the first, and with a height for example equal to 20 µm, is made both on the ridges and in the valleys of the first scoring.

In the example in Figure 5a, the second scoring 70 is made only in the valleys 62 of the first scoring.

In the example in Figure 5b, the second scoring 70 is made only on the ridges 60 of the first scoring. In this case, the valleys of the first scoring, devoid of the second scoring, may have a concave rather than flat shape.

Figure 6 shows schematically a portion of the base surface 80 of a ski, in which a print has been engraved that mirrors the incision of the grinding wheel shown in figure 5a. Grooves 82 are in fact observed which correspond to the first ridges 60, interspersed by ridges 84, for example with a flat profile, corresponding to the first valleys 62. On each of such ridges 82 the second scoring 70 is impressed (in a complementary manner).

Such a shape of print gives particularly high performance during alpine skiing competitions, in cases where the temperature of the snow is so variable along the track that a single scoring of the base surface suitable to make the ski slide smoothly in a portion of the track would not give an equally high performance in other sections of track with different snow temperatures.

With the varied structure print described above, instead, the different scorings created on different levels make it possible to achieve maximum sliding of the base surface at all times. For example, in an initial portion of the track, where the snow is frozen, the second scoring 70 made on the ridges of the first print works; in a terminal portion of the track where the snow is wet, the valleys, or grooves 82 of the first scoring work.

In one embodiment, the first three electric motors are controlled in such a way as to engrave the side surface of the grinding wheel with a continuous action of the tool. This method of engraving the grinding wheel, which requires very high precision in the control of the motors so that the second impression does not damage the first impression, is also made possible by the electronic cam programming defined by polynomials.

In one embodiment, the varied structure print made on the side surface of the grinding wheel is transferred to the base surface in a single passage of the ski on the machine. This results in a drastic reduction of the machining times of the base surface and prevents subsequent passages from altering the structure realized in the first passage.

In one embodiment, the operator interface 44 allows, after selection of a type of print 50 to be engraved on the base surface, to also select at least one geometric characteristic of such print from a range of predetermined values.

For example, the value of the following characteristics of the print can be selected: angle of inclination of the splitting, length of the print, length of the distance between two consecutive prints, depth of the print profile, pitch of the print profile, number of threads of the mother line profile, the number of threads of the splitting line profile. Based on the value of these parameters, the processing unit recalculates the polynomials of the position, speed and acceleration curves of the first electric motor and the polynomials of the electronic cams of the other electric motors.

In a further embodiment, the computer 400 is equipped with hardware and software means suitable to allow a programmer to create a new print with a simple drawing tool, for example modifying a basic print as desired. The new print is divided into print portions stored in the remote database 300, for which the control polynomials of the electric motors are already known.

In other words, the remote database 300 contains an archive of "macro", each corresponding to a portion of print, which can be combined to create infinite prints.

Of course, each "macro", or print portion corresponds to a machining programme, or a part of a machining programme.

The computer 400 is further adapted to generate possible connecting portions between print portions to be connected, for example by interpolation.

According to one embodiment, the machine is equipped with sensors and transducers suitable to measure the current diameter of the grinding wheel, the geometric characteristics of the tool, the pressure of the ski drive wheel, and other variables that may affect the machining of the base surface.

In particular, in the step of creating on the side surface of the grinding wheel at least one mother thread and at least one splitting thread which intersects with the mother thread, the angle of inclination of the splitting thread is calculated in real time during the engraving of the side wall of the grinding wheel as a function of the grinding wheel diameter.

Additionally, in the phase of creating on the lateral surface of the grinding wheel at least one mother thread and at least one splitting thread which intersects with the mother thread, the difference between the speed of rotation of the grinding wheel during the creation of the mother thread and the speed of rotation of the grinding wheel during the creation of the splitting thread is calculated in real time as a function of the grinding wheel diameter.

According to one embodiment, the machining process of the base surface also takes into account the size and shape of the ski, and in particular some parameters of the machining process vary as a function of the portion of ski in contact with the grinding wheel.

For example, before the start of processing the machine is supplied with the values of the length and/or width of the front, middle and rear portions of a ski to be subjected to machining of the base surface (figures 7a-7d). In one embodiment, the first electric motor 14 and / or the fourth electric motor 26 is controlled in such a way as to vary the speed of passage over the grinding wheel from one of such portions of the ski to another. This way, the number of prints is differentiated per unit of length from one portion of a ski to another.

Figures 7a and 7b show, for example the speed profiles 90, 90'; 92, 92' of the fourth and the first motor for a ski for alpine skiing and a ski for cross-country skiing, respectively, as a function of the length of the skis and their portions.

In a further embodiment illustrated in figure 7c of the screen, the pressure exerted by the drive wheel 24 on the ski is varied, as well as a function of the current diameter of the grinding wheel, also as a function of the ski portion subjected to machining. This pressure control is carried out either to dynamically correct the value of the pressure per unit of surface as the width of the ski varies, so as to have a constant pressure, or to reduce the pressure in the tail of the ski in order to avoid, especially with cross-country skis, an excessive wear of the base surface as shown for example from the pressure curve 100 in figure 6c, relative to the cross-country ski.

In a further embodiment illustrated in figure 7d of the screen, also the profile of the drive wheel in contact with the ski can be modified as a function of the ski portion subjected to machining by controlling the pressure of the fluid in the wheel. It may pass, for example from a "saddle" profile, which better distributes the pressure towards the edges of the ski, to a concave profile, which concentrates more pressure on the central portion of the ski.

A person skilled in the art may make modifications and variations to the embodiments of the method and system of machining the base surface of a ski according to the invention, replacing elements with others functionally equivalent so as to satisfy contingent requirements while remaining within the sphere of protection of the following claims. Each of the characteristics described as belonging to a possible embodiment may be realised independently of the other embodiments described.

## Claims

1. Method of machining a ski, comprising:
- providing a numerical control processing machine, comprising:
- at least one machining tool of the ski;
- at least an electric motor suitable to move said machining tool;
- a processing unit suitable to control the electric motor according to a predetermined machining programme;
- an operator interface comprising hardware and software means for transmitting and receiving data to and from the processing unit;
- providing at least one remote database external to the processing machine, a plurality of different ski machining programmes being stored in said database, each programme being associated with respective input data representative at least of the snow characteristics, of the track, the ski, the athlete, said external database being accessible by means of the operator interface through a communication network;
- supplying to the database, via the operator interface, current values to be assigned to said input data;
- returning to the operator interface a subset of said ski machining programmes, selected on the basis of said current values;
- supplying to the processing unit a machining programme belonging to said subset.

2. Method according to the preceding claim, wherein said remote database is accessible from several operator interfaces associated with respective processing machines.

3. Method according to claim 1 or 2, wherein said ski machining programmes are made on one or more computers external to the processing machine of the ski.

4. Method according to any of the preceding claims, wherein the ski machining programmes include one or more parameters, and wherein, before supplying the processing unit with the selected machining programme, the value to be assigned to said one or more parameters is set by means of the operator interface.

5. Method according to any of the preceding claims, to perform machining of the base of a ski, wherein the numerical control machine comprises:
- a grinding wheel having a cylindrical side surface which defines a grinding wheel rotation axis (A);
- a first electric motor suitable to place in rotation the grinding wheel about said grinding wheel rotation axis (A) ;
- a grinding wheel machining tool suitable to be placed in contact with the grinding wheel in rotation so as to create a groove on said cylindrical side surface;
- a second electric motor suitable for moving said tool along a longitudinal direction parallel to the axis of rotation of the grinding wheel;
- a third electric motor suitable for moving said tool along a transverse direction orthogonal to the axis of rotation of the grinding wheel;
- a ski driving unit, suitable to move the ski along a direction of advancement parallel to the direction of longitudinal extension of the ski;
- a fourth electric motor suitable to actuate said ski driving unit,
wherein each base machining programme associates with at least one footprint to be made on the base, a position, speed and acceleration profile for the control of the first electric motor, and defines, for each of the remaining electric motors, an electronic cam which links the position, speed and acceleration profile of each of the remaining electric motors to the position, speed and acceleration profile of the first electric motor, wherein each cam is expressed by a family of polynomials.

6. Method according to the preceding claim, wherein a machining programme of the base comprises machine instructions for forming a first and a second scoring of the base, the first scoring defining a plurality of first ridges interspersed by a plurality of first valleys, the second scoring defining a plurality of second ridges interspersed with a plurality of second valleys, the second scoring being made on one or more of the first ridges and / or in one or more of the first valleys of the first scoring.

7. System for machining a ski, comprising:
- a numerical control processing machine, comprising:
- at least one machining tool of the ski;
- at least an electric motor suitable to move said machining tool;
- a processing unit suitable to control the electric motor according to a predetermined machining programme;
- an operator interface comprising hardware and software means for transmitting and receiving data to and from the processing unit;
- at least one remote database external to the processing machine, a plurality of different ski machining programmes being stored in said database, each programme being associated with respective input data representative at least of the snow characteristics, of the track, the ski, the athlete, said external database being accessible by means of the operator interface through a communication network and being programmed to supply to the operator interface a subset of said ski machining programmes, selected on the basis of the value of said input data;
wherein the operator interface is configured to provide to the database current values to be assigned to said input data, to receive from the database a subset of the machining programs, and to provide to the processing unit a machining programme from said subset.

8. System according to the preceding claim, wherein said remote database is accessible from several operator interfaces associated with respective processing machines.

9. System according to claim 7 or 8, further comprising one or more computers external to the machine configured to perform the machining programmes of the ski.

10. System according to any of claims 7-9, wherein the ski machining programmes include one or more parameters, and wherein the operator interface is configured to set the value to be assigned to said one or more parameters.

11. System according to any of the claims 7-10, wherein the machine comprises:
- a grinding wheel having a cylindrical side surface which defines a grinding wheel rotation axis (A);
- a first electric motor suitable to place in rotation the grinding wheel about said grinding wheel rotation axis (A) ;
- a grinding wheel machining tool suitable to be placed in contact with the grinding wheel in rotation so as to create a groove on said cylindrical side surface;
- a second electric motor suitable for moving said tool along a longitudinal direction parallel to the axis of rotation of the grinding wheel;
- a third electric motor suitable for moving said tool along a transverse direction orthogonal to the axis of rotation of the grinding wheel;
- a ski driving unit, suitable to move the ski along a direction of advancement parallel to the direction of longitudinal extension of the ski;
- a fourth electric motor suitable to actuate said ski driving unit;
- the processing unit being programmed to implement a machining method of the base of the ski according to claim 5 or 6.
